(19) **Europäisches Patentamt**

**European Patent Office**

**Office européen des brevets**

(11) **EP 1 138 137 B1**

(12) **EUROPEAN PATENT SPECIFICATION**

(45) Date of publication and mention
of the grant of the patent:
**13.10.2004 Bulletin 2004/42**

(51) Int Cl.7: **H04L 12/28**, H04L 29/06,
H04M 7/00, H04M 11/06

(21) Application number: **99957396.7**

(22) Date of filing: **07.12.1999**

(86) International application number:
**PCT/IL1999/000666**

(87) International publication number:
**WO 2000/035145 (15.06.2000 Gazette 2000/24)**

(54) **WIRELESS LOCAL LOOP SYSTEM AND METHOD USEFUL THEREFOR**

SCHNURLOSES TEILNEHMERANSCHLUSS-SYSTEM UND HIERFÜR NÜTZLICHES
VERFAHREN

SYSTEME EN BOUCLE, LOCAL ET SANS FIL, ET PROCEDE ASSOCIE

(84) Designated Contracting States:
**AT BE CH CY DE DK ES FI FR GB GR IE IT LI LU
MC NL PT SE**

(30) Priority: **07.12.1998 IL 12743598
07.12.1998 IL 12743798**

(43) Date of publication of application:
**04.10.2001 Bulletin 2001/40**

(73) Proprietor: **Airspan Networks (Israel) Ltd.
71293 Lod (IL)**

(72) Inventor: **SLOVIN, Zvi
76303 Rehovot (IL)**

(74) Representative: **Horner, David Richard
D Young & Co,
21 New Fetter Lane
London EC4A 1DA (GB)**

(56) References cited:
**EP-A- 0 766 490         EP-A- 0 794 643
EP-A- 0 810 761         EP-A- 0 843 454
EP-A- 0 843 494         WO-A-97/12456
WO-A-98/24224         US-A- 5 457 680**

# EP 1 138 137 B1

**Description**

FIELD OF THE INVENTION

The present invention relates to communication systems generally and more particularly to wireless local loop systems and wireless information transactions.

BACKGROUND OF THE INVENTION

Wireless local loop systems are known.
IP is the conventional Internet protocol.
The state of the art as pertaining to quality of service, wireless local loop systems and the Internet generally is exemplified in the following publications:

[1] G. Mapp and S. Hodges. QoS-Based Transport.
[2] J. Crowcroft and P. Oechslin. Differentiated End-to-End Internet Services using a Weighted Proportional Fair Sharing TCP.
[3] D. K. H. Tan. Rate control and User Behaviour in Communication Networks.

EP-0 766 490 A2 discloses an integrated radio communication system in which a radio local area network is used for communication between data terminals, with an internet network being used for fast data transfer. The connection between networks is handled by a gateway computer which operates like a base station controller.
WO 97/12456 discloses a wireless local loop communication network for interconnecting local area networks.
WO 98/24224 discloses a general access system for access to communications services

SUMMARY OF THE INVENTION

An embodiment of the present invention seeks to provide a Wireless Local Loop (WLL) system to an information transaction between two peers within a Wireless IP Local Loop (WipLL) system, whose scheme of operation comprises an Internet protocol (IP) packet switching scheme rather than a circuit switching scheme. This Wireless (Internet Protocol) Local Loop (WipLL) system seeks to provide an "all-in-one" broadband access solution for the operator, supporting a variety of data and voice applications on a single integrated platform.
In accordance with one aspect of the present invention there is provided a wireless local loop system including a data network/PSTN gateway unit, at least one data line, at least one base station connected to the gateway unit via the at least one date line respectively, a multiplicity of wireless subscriber units communicating wirelessly with the base station, each wireless subscriber unit including at least one interface to at least one host including a telephone host, the system being characterised in that each subscriber unit comprises an analog converter operative to translate incoming information in IP packet format into analog voice representation and to feed the analog voice representation to the telephone host, and to receive incoming analog voice information from the telephone host, to translate the incoming analog voice information into IP packet formatted information and to feed the IP packet formatted information to the base station, and a packet switcher operative to perform packet switching on IP packets arriving from the base station connected to the subscriber unit, including routing IP packets for hosts other than the telephone host to those hosts and routing IP packets for the telephone host to the analog converter, and wherein the base station is operative to perform packet switching on incoming IP packets based on an IP destination address included in each incoming IP packet, and wherein the gateway unit is operative to switch incoming data packets onto the data network, to translate incoming voice packets from IP packet format into analog voice representation and to switch the analog voice representation onto a PSTN.
Further in accordance with a preferred embodiment of the present invention each host comprises one of the following group of host types: a telephone, a telefax, a computer, a data modem and a cable modem.
Still further in accordance with a preferred embodiment of the present invention the at least one data lines include wired data lines.
Additionally in accordance with a preferred embodiment of the present invention the data network comprises the Internet.
In accordance with another aspect of the present invention there is provided a wireless local loop method comprising the steps of providing a data network/PSTN gateway unit, at least one data lines, at least one base stations connected to the gateway unit via the at least one data lines respectively and a multiplicity of wireless subscriber units communicating wirelessly with the base station, each wireless subscriber unit including at least one interface to at least one host including a telephone host, the method being characterised by the steps of providing a subscriber unit com-

2

prising an analog converter operable to translate incoming information in IP packet format into analog voice representation and to feed the analog voice representation to the telephone host, and to receive incoming analog voice information from the telephone host, to translate the incoming analog voice information into IP packet formatted information and to feed the IP packet formatted information to the base station, and performing packet switching on IP packets arriving from the base station connected to the subscriber unit, including routing IP packets for hosts other than the telephone host to those hosts and routing IP packets for the telephone host to the analog converter and wherein the base station is operative to perform packet switching on incoming IP packets based on an IP destination address included in each the incoming IP packet, and wherein the gateway unit is operative to switch incoming data packets onto the data network, to translate incoming voice packets from IP packet format into analog voice representation and to switch the analog voice representation onto a PSTN.

An embodiment of the present invention provides a shared media that is used by all customers in the most optimal way due to its packetised air protocol. This technology enables one of the system's unique features: The ability to recognize the content of a transmission - e.g. its application - and assign Bandwidth (BW) and Quality-of-Service (QoS) accordingly.

Various data applications such as Video-conferencing, Fast-Internet access, Teleworking, E-mail, Frame-Relay and others, are each supported optimally by an embodiment of the present invention.

An embodiment of the present invention, operative as an integrated broadband terrestrial wireless system, is a complete system solution for carriers or providers of multiple fixed access services to the SME (small to medium enterprises), SOHO (small office home office) and residential marketplace including Voice, Data and Video.

An embodiment of the present invention has significant cost and service advantages over existing wired solutions (HFC, ADSL, FTTC) due primarily to the economic advantage of wireless deployment where customer penetration rates are not optimal and cannot be fully anticipated. The system allows new carriers, as well as incumbents, to deploy, quickly and relatively inexpensively, a full service broadband access network.

Unlike traditional circuit-switched systems, a quality of service system will provide more efficient BoD (Bandwidth-on-Demand) with selectable QoS which are both determined by the actual throughput data or the content.

The unique features of the quality of service system includes the integration of multiple services, including data voice and video, on a single platform, QoS supported by advanced air protocol, bandwidth assignment according to true data throughput, wireless access with efficient spectrum use, toll quality telephony and voice band data, large coverage area - up to 25 km radius, high Base Station capacity due to capability for co-located multiple radio units, comprehensive and user-friendly Network Management System and scalability.

Quality-of-Service (QoS) is a term that is related to sessions.

A session is defined as an information transaction between two or more peers.

QoS of a session is a set of conditions that should be maintained during the information transaction, e.g., required bandwidth (Kbps), transaction latency (delay), tolerance to jitter (variation of delay), tolerance to information loss, etc.

A network is a graph that its nodes are peers exchanging information, and its edges are the physical connection media, e.g., copper wiring.

Congestion is a temporary information flow block that occurs in heavy loaded networks.

A loaded network presents different behaviors depending on its topology and information load, one particular behavior is congestion. Congestion leads to starvation (spatio-temporal access blocking to physical resources). Starvation in its turn leads to large transaction latencies and cutouts.

Congestion versus session behavior:

All sessions present defined timeouts for the information stream delay. Some sessions have defined and constant used bandwidth, e.g., telephone sessions. Other sessions use all available bandwidth - the available channel is sensed by the return path delay, and the information transmission rate is adjusted accordingly (the session uses all available bandwidth, but minimizes system's queues).

If all sessions were bandwidth adjustable, all queues in the system would then become very small. Thus, in an overloading scenario, rate adaptation and session denial could maintain QoS. As "real-world" networks (and webs) are a mixture of sessions, some of which can not be rate adjusted, some presenting dramatically different delay requirements, etc., bandwidth adjustment alone is not enough to prevent congestion and starvation..

The quality. of service system preferably utilizes three simultaneous approaches to provide Quality of Service to an information transaction between two peers within a WipLL system: Weighted Fair Queuing (WFQ, based on the time-to-live of the different packets in the transmission queue of a node); rate-control; and QoS-scheduling. The quality of service system particularly utilizes WFQ and QoS-scheduling and the adaptive combination between them.

Furthermore, the WFQ can handle node-queues, but it can not handle the all access system (e.g. star topology) queuing without some introduction of congestion. Thus, Weighted-queuing is performed between the different node-queues in the system. Each queue is represented by a severity grade that the network master allocated.

The WipLL system presents a QoS mechanism that preferably includes some or all of the following three major features:

1. Adaptive network filtration and forwarding agent, responsible for forwarding packets that "belong" to the wireless channel only. Thus, irrelevant data streams are filtered out and do not compete over the air channel.

2. The QoS server is responsible for network and application layers policies execution including analyzing each incoming packet, detecting its session, evaluating channel load, performing flow control operations (such as delaying packets, intervening into the connection layer, etc.) and attaching a QoS header (over the air) to a packet describing the packet's boundary conditions (such as retransmission criteria, TTL, etc.). It is emphasized that TCP (for example) rate control can be carried out in such a way that queues within the access system are kept in constant length. This in turn leads the system into additional minimization of session jitter, and thus enhances performance.

3. Classified queuing for TTL adaptive access latency within the MAC domain, enabling optimal channel bandwidth control (for queued data regimes).

These three features in complementary operation within the system guarantees quality of service within an integrated services system.

A quality of service system includes a congestion avoidance subunit wherein the congestion avoidance unit is operative to perform classified queuing, and a traffic flow control unit.

A quality of service server apparatus includes a protocol detector, and a connection layer analyzer including a UDP analyzer, a TCP analyzer and an ICMP analyzer.

The UDP analyzer includes a rate controlled UDP analyzer.

The TCP analyzer includes a rate controlled TCP analyzer.

The UDP analyzer performs at least some of the following steps: identifies applications by using its port number, checks whether packet belongs to already open session by comparing port numbers and session's participant's IP addresses, if it is an open session, stamp packet with TTL from applications lookup table, if it is a new session, consult with policy agent to determine whether this session is allowed to initiate, inform MAC on application's covenant, in terms of CS air MAC-address and inform MAC about session end events.

The TCP analyzer performs at least some of the following reliability checks, acknowledges receipt of packets, retransmits when dropped packets are detected, re-sequences segments, if necessary, if they arrive out of order, tosses packets if data became corrupt during transmission, discards duplicate segments and maintains flow control to manage a connection's transmission rate.

The congestion avoidance unit is operative to perform classified queuing.

The rate of TCP transmissions is at least partly controlled by detecting real-time flow speed and then delaying ACKs going back to the transmitter.

The rate of TCP transmissions is at least partly controlled by modifying the advertised window size in the packets sent to the transmitter.

The classified queuing performed by the congestion avoidance unit includes assigning packets arriving with a time-to-live stamp to the transmit-queue cluster, to a queue according to their time-to-live indicator.

A quality of service system includes an adaptive network filtration and forwarding agent, a quality of service server, and a classified queuing mechanism.

The agent is operative to forward packets that belong to the wireless channel only while filtering out irrelevant data streams and competing over the air channel.

The quality of service server is operative to execute network and application layers policies including executing at least one of the following: analyzing each incoming packet to detect its session, evaluating channel load, performing flow control operations such as delaying packets and intervening into the connection layer, and attaching a quality of service header to the packet describing the packet's boundary conditions.

Rate control is carried out such that queues within the access system are kept at substantially a constant length, thereby to reduce session jitter.

The classified queuing mechanism provides TTL adaptive access latency within the MAC domain, thereby to enable improved channel bandwidth control for queued data regimes.

BRIEF DESCRIPTION OF THE DRAWINGS

The present invention will be understood and appreciated from the following detailed description, taken in conjunction with the drawings in which:

Fig. 1 is a simplified block diagram of the WipLL system comprising: a Base Station Unit (BSU), at least one End Point Units (EPU) and a Management System constructed and operative in accordance with a preferred embodiment of the present invention;

Fig. 2 is a simplified block diagram of a Base Station Unit constructed and operative in accordance with a preferred embodiment of the present invention;

Fig. 3 is a simplified block diagram illustrating two of the most common base station configurations constructed and operative in accordance with a preferred embodiment of the present invention;

Fig. 4 is a simplified block diagram of an Air Interface Unit (AIU) constructed and operative in accordance with a preferred embodiment of the present invention;

Fig. 5 is a simplified block diagram of an IP router constructed and operative in accordance with a preferred embodiment of the present invention;

Fig. 6 is a simplified block diagram of a Gateway and a Gatekeeper constructed and operative in accordance with a preferred embodiment of the present invention;

Fig. 7 is a simplified block diagram of an End Point Unit constructed and operative in accordance with a preferred embodiment of the present invention;

Fig. 8 is a simplified block diagram of an Integrated Indoor Data Adapter (Integrated-IDA) constructed and operative in accordance with a preferred embodiment of the present invention;

Fig. 9 is a simplified block diagram of a typical IP network utilizing the system constructed and operative in accordance with a preferred embodiment of the present invention;

Fig. 10 is a simplified block diagram of global data flow within a Wireless IP Local Loop (WipLL) system constructed and operative in accordance with a preferred embodiment of the present invention;

Fig. 11 is a simplified flowchart illustrating TCP rate control;

Fig. 12 is a simplified illustration of a QoS server controlling data transmission;

Figs. 13A and 13B, taken together, are a simplified block diagram of data traffic behavior both with and without the control of a QoS server system;

Fig. 14 is a simplified block diagram of the operation of a QoS server system; and

Figures 15A - 15D are simplified illustrations of the different policy attributes which may be presumed.

## DETAILED DESCRIPTION OF PREFERRED EMBODIMENTS

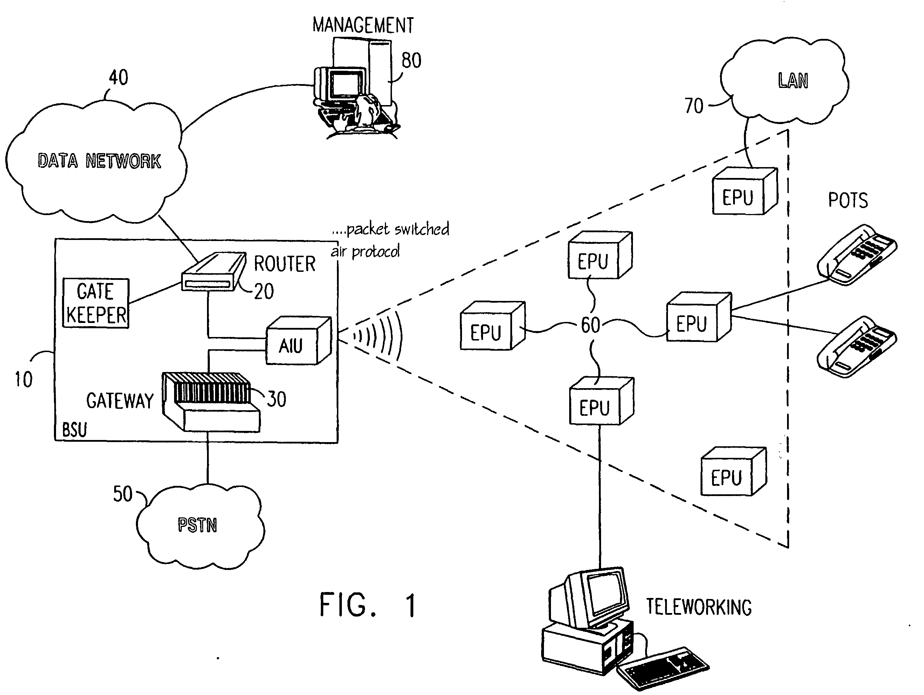

The broadband point-to-multipoint wireless IP access system presented in this embodiment is comprised of three major constituents, as shown in Fig. 1:

A Base Station Unit (BSU) 10, which:

uses Routers 20 and gateways 30 to connect the System to Data Networks 40 (IP, ATM etc.) and to the PSTN 50; and

converts all transmissions to a packetized bit stream and transmits it via a wireless link to each End Point Unit (EPU) 60 in the cell.

At least one EPU 60 which exists at each subscriber end. The subscriber's EPU receives the packetized bit stream and passes said bit stream to its PC, LAN 70, telephone or other interface equipment.

A Management System 80 - that controls and manages the System. The management system recognizes the content of each packet and assigns accordingly the appropriate Quality-of-Service and bandwidth based on a prearranged Service Level Agreement. This means that spectrum not in actual use can be used by The system elsewhere - a far more effective arrangement than a circuit-switched solution.

The Base Station Unit

The BSU interfaces between the end users and the different networks according to the applications that are supported. e.g. The base station may support Ethernet, POTS and/or other applications over an IP-network. In this case the BSU will interface between the air protocol from the EPU and an IP cloud. To connect to the IP cloud a IP Router may be included in the Base Station.

Alternatively the BSU may interface between POTS (or ISDN) end users and the PSTN-network. In this case the BSU interfaces between the air protocol from the EPU and the PSTN. To connect to the PSTN cloud a Gateway may be included in the Base Station.

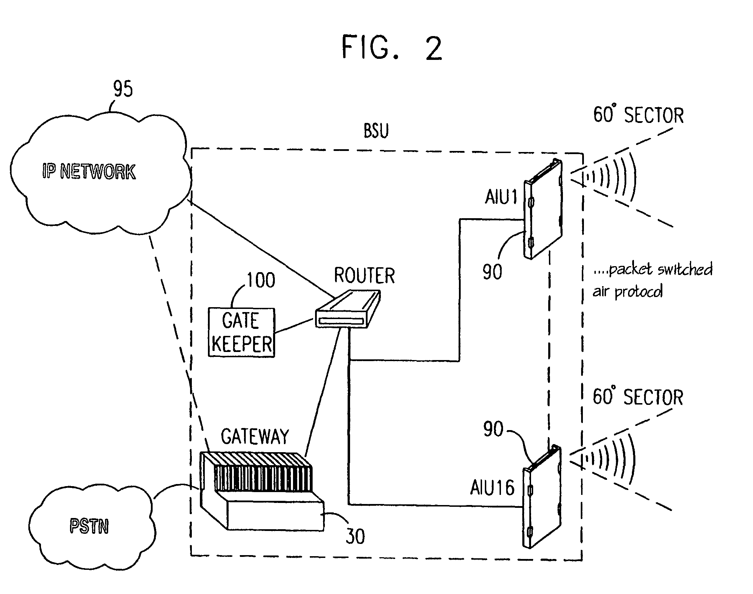

Thus the BSU is composed of the following elements, as shown in Fig. 2:

one or more Air Interface Units (AIU) 90, where each AIU covers a sector in the Base Station's coverage cell;
an IP Router 20 that allows interfacing to IP networks 95 (when such interface is required;
a Gateway 30, when there is a need to interface to a different network such as the PSTN; and
a Gatekeeper 100, in conjunction with that Gateway.

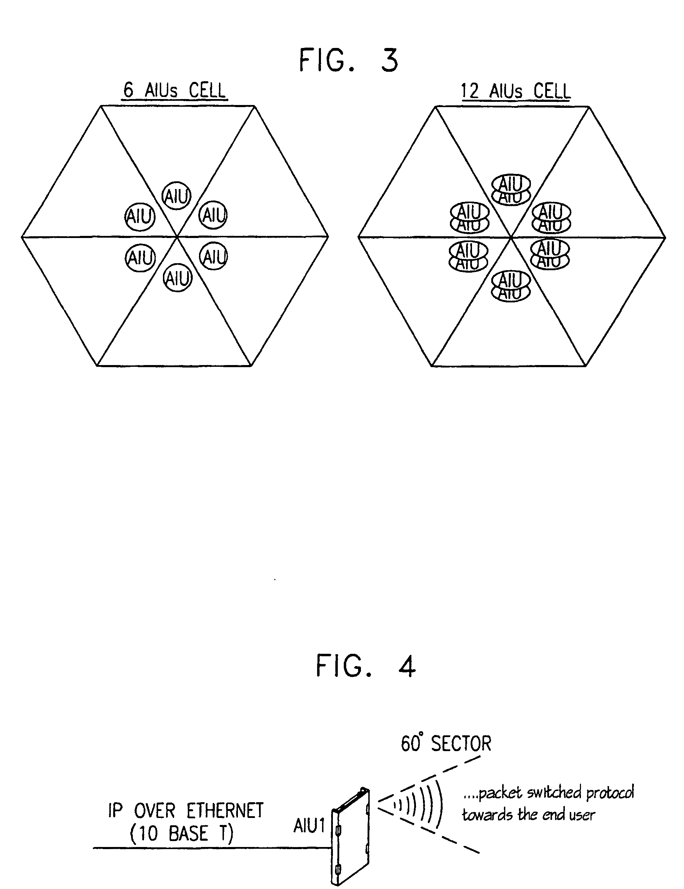

The maximum number of AIUs that can be co-located in a single Base Station actually depends on the allocated bandwidth. Typically, in a 20 MHz band, 10 - 16 AIUs can co-exist. Consequently, numerous AIUs can be connected to the Router using IP over Ethernet (10BaseT interface). Fig. 3 illustrates the two most common Base Station configurations. Note that each two-radio unit that co-exists in the same sector is separated by a frequency band. Six AIUs in a six-sector cell provide a capacity of about 24 Mbps/cell (about 20Mbps/cell net throughput), while twelve AIUs in such a cell will double the bit rate per cell to 40 Mbps/cell.

The Air Interface Unit (AIU)

The AIU, as shown in Fig. 4, is a necessary constituent of any base station configuration since it is responsible for the air interface with the end user equipment.
The Air Interface Unit (AIU) comprises:

a radio unit which can maintain a 4 Mbps air link (net throughput of 3.2 Mbps) with the End User's equipment;
a high powered transmitter; and
an internal high gain directional antenna that, together with said high powered transmitter, makes large cells - of up to 25 km radius - possible.

The AIU radio employs Frequency Hopping Spread Spectrum, especially useful when used in the 2.4 GHz ISM band. However, it can also be used with Dynamic Channel Assignment which increases its spectrum efficiency and improves its reuse factor.
The AIU outputs a 10BaseT Ethernet line with IP protocol, said output is used to interface, through an appropriate IP router, to IP networks.
Each AIU can co-exist with other AIUs to provide full cell coverage. e.g., 10-16 AIUs can co-exist in a 20MHz band, depending on the terrain and environmental conditions. This corresponds to a 40 - 64 Mbps/cell capacity respectively.
Each AIU radio unit in the BSyU can maintain a 4 Mbps link with the subscribers in its sector. In this link the radio can maintain, for example, 50 simultaneous (64 kbps) voice links. Table 1 shows the number of simultaneous users connected to one BSU in a typical 6-sector cell with one AIU (radio) per sector, assuming 100 mE/subscriber and 1% GOS.

Table 1

| Voice @ 64 kbps | Data @ 256 kbps | Videocon @ 384 kbps |
|---|---|---|
| 300[1] | - | - |
| 150 | 38 | - |
| 125 | 31 | 8 |

[1] Each sector contributes 50 POTS channels.

Table 2 shows the total number of subscribers served by one BSU in a typical 6-sector cell, with one AIU (radio) per sector, assuming 100 mE/subscriber and 1% GOS.

Table 2

| Voice @ 64 kbps | Data @ 256 kbps | Videocon @ 384 kbps | |
|---|---|---|---|
| 2280[2] | - | - | |
| 1140 | 300 | - | |
| 950 | 250 | 67 | |

[2] Erlang computations were performed separately for each sector and then the computed Erlang values of all 6 sectors were added.

The IP Router

When the base station is connected to an IP network an IP Router is used in the base station. The IP-Router will interface between the AIUs of the base station and the IP-Network.

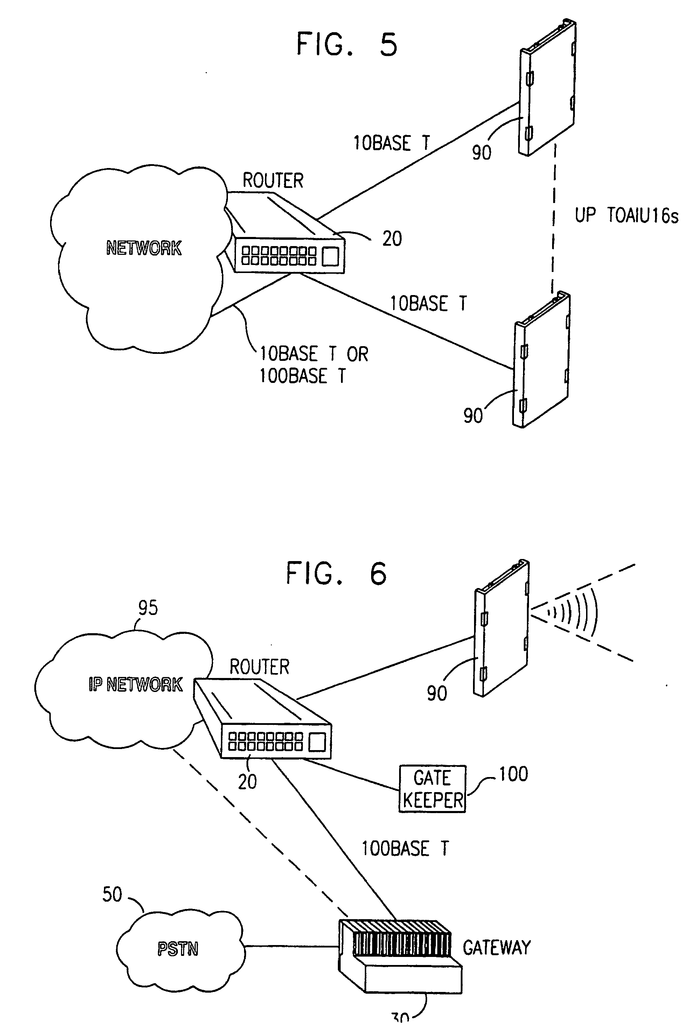

The IP-Router 20 accepts Ethernet (10BaseT) lines from each and every AIU 90 in the Base Station, and outputs an IP Ethernet (100BaseT or 10BaseT) line toward the IP network, as shown in Fig. 5.

The Gateway

The system is connected to PSTN 50 through a Gateway 30. The gateway processes PSTN signals and converts them to IP addressed packets, said packets are then fed to the router and on toward the subscribers. The interface between the router and the Gateway uses IP over Ethernet, 100BaseT.

Gateway outputs towards the PSTN are processed into the appropriate telephony signaling format.

The Gatekeeper

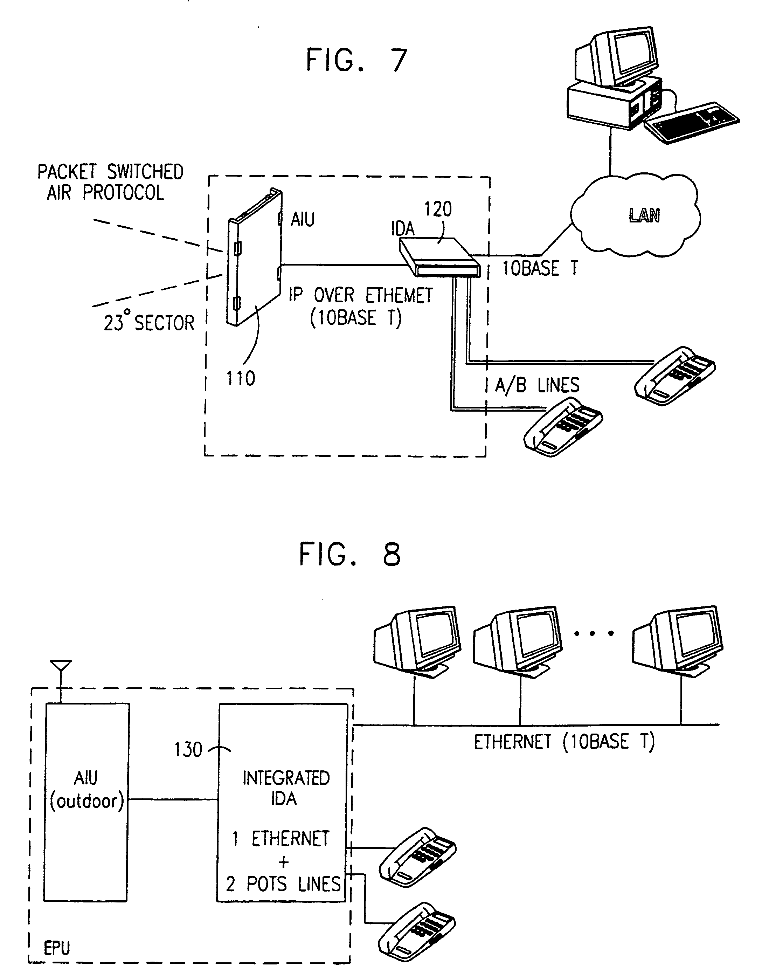

The gatekeeper 100 performs tasks of Call Processing, Echo Canceling and the telephony part of the network management. The gateway and gatekeeper are illustrated in Fig. 6.

The End Point Unit (EPU)

The EPU includes all the hardware that is installed at the end-user premises (excluding subscribers' end products like telephone, PC, fax, computer workstation etc.). The EPU is divided into two main parts, as shown in Fig. 7:

an Air Interface Unit (AIU) 110; and
an Indoor Data Adapter (IDA) 120 module which has an IP telephone interface and an Ethernet connection to the user's LAN or PC.

The Air Interface Unit (AIU)

The AIU in the EPU is similar to the AIU in the BSU; however, there are differences between the two.

The main function of the EPU's AIU is to interface between the Base Station and the IDA. The AIU interfaces to the Base Station using the Packet-Switched based Air Protocol, and it interfaces with the IDA using IP over an Ethernet.

Both the Air Protocol and Air Interface are similar on both sides, as are the mechanical characteristics of the AIUs.

The internal antenna in the EPU's AIU is much more directional than in the BSU's AIU since the AIU on the subscriber side is communicating to a single point only, namely the Base Station. Thus, while the Base Station's AIU is equipped with a 60° directional antenna, the AIU in the subscriber end is equipped with a 23° antenna.

The Indoor Data Adapter (IDA)

The Indoor Data Adapter is the interface to the End-User's equipment. Thus, the End-User's Telephone, PC or any other data equipment like Teleconferencing, Automatic-Tele-Money (ATM), Point-of-Sale or Telemetry equipment will all be connected to IDAs.

Different IDAs are available for different applications: e.g. for LAN applications a special Ethernet IDA that interfaces to Ethernet 10BaseT LANs is available. If POTS telephones are required in addition to LAN applications then a different IDA unit, the Integrated-IDA, is required. The Integrated IDA has a Ethernet interface as before but in addition it has two POTS interfaces that can be connected to any standard phone or fax equipment. The POTS support in the System is of high quality 64 Kbps PCM. A schematic illustration of the Integrated-IDA 130 is seen in Fig. 8.

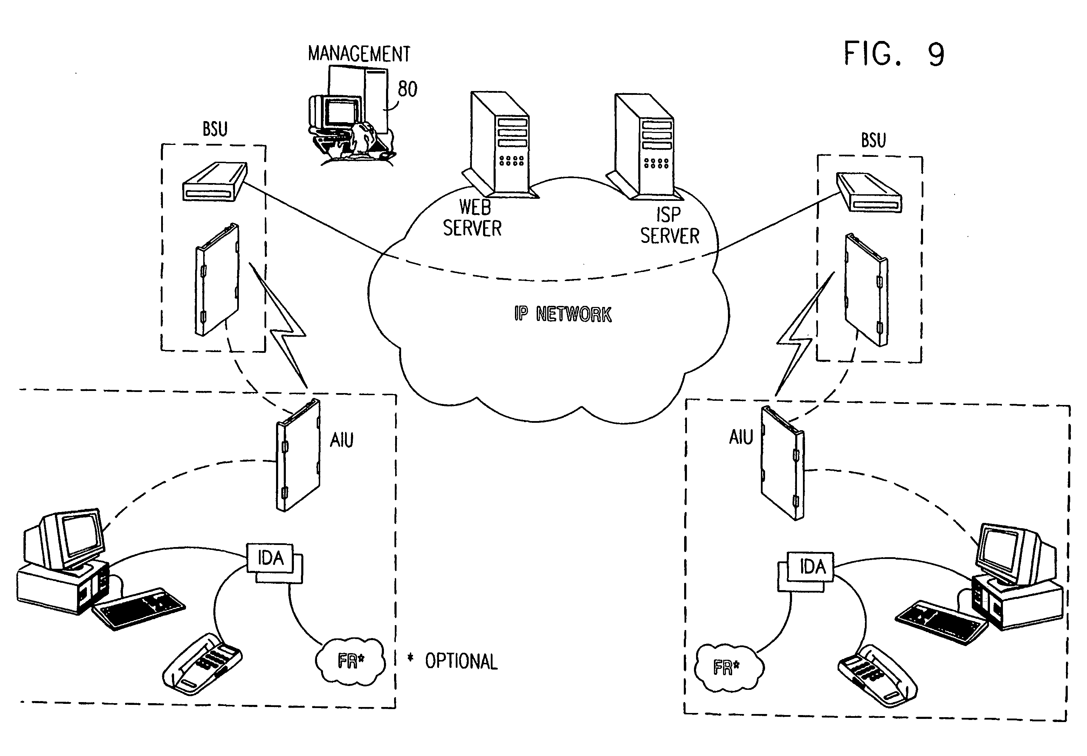

Fig. 9 illustrates a typical application of the WipLL system used as a Wireless Access system for an IP backbone cloud, constructed and operative in accordance with a preferred embodiment of the present invention.

It is noted that up to 20 AIUs can co-exist in a single BSU and many EPUs can be in every sector.

It is further noted that the System can be implemented in a single cell environment (no neighboring cells) as well as in a heavily populated multi-cell environment.

Table 3 shows the specifications of the system constructed and operative in accordance with a preferred embodiment of the present invention.

Table 3

| Parameter | Value | Comments |
|---|---|---|
| **Data Channel** | | |
| AIU Data Rate | 1,2,3,4 Mbps | BER and Distance Dependent |
| Base Station Raw Data Rate | 24 - 64 Mbps | Depends upon country regulations |
| TCP/IP Compression | 1.8 :1 | Ziv-Lempel Method |
| Effective Throughput (typ.) | 80 % | at BER = $10^{-5}$ |
| Communication Range | 6-25 km | Rate and Regulation dependent |
| **Network Management** | | |
| Characteristics | HPOV + Solaris, support MIB II, IP MIB and bridge MIB, in addition to the private MIB. | |
| **Telephony** | | |
| Voice | PCM-Toll Qual. | |
| Voice Band Data | up to 53 Kbps | Modems |
| PSTN Interface | E1(V5.2,CAS,.) T1(TR008,303) | |
| Backup Battery | 4 hours | |
| Delay (Typical) | < 30 msec | Short "time to live" |
| Echo Cancellation | Up to 160 msec | |
| **Radio** | | |
| Frequency Range | 2.4-2.48 GHz | FCC/Part 15- Unlicensed, other frequencies will be available |
| AIU Transmitted Power | 30 dBm | |
| Information Bandwidth | 1 MHz | |
| Error Correction | ARQ | and turbo-codes |
| MODEM | 8 level FSK | |
| Spectral Performance | By FCC/Part 15 | At Present |
| **Physical Characteristics** | | |
| Dimensions | 302x196x67 mm | |
| Environmental | -30°C to 75°C | |

A particular advantage of a preferred embodiment of the present invention is that a good solution is provided to the problem of providing bandwidth on demand and, at the same time, providing acceptable quality of service for a variety of integrated services including but not limited to voice, data and multimedia. This problem is solved, according to a preferred embodiment of the present invention, by replacing the circuit switched network which conventionally forms the wireless local loop, by a packet switched network such as an IP network.

In order to implement a packet switched embodiment of a wireless local loop, the following features are preferably provided:

a. Conversion of all formats of all information streams, into a single information format such as IP packet (datagram) format, using a suitable conversion standard such as H-323 or MGCP. The H-323 standard is available from www.itu.org. The MGCP standard is described in RFC 2705 posted at www.faqs.org/rfcs.

b. Routing of packets. Typically, conventional routing techniques are used and conventional routing considerations govern the design of the system, such as the routing techniques and considerations described in Martha E. Steenstrup (Ed.), Routing in Communication Networks, Prentice-Hall, 1995, ISBN 0-13-010752-2.

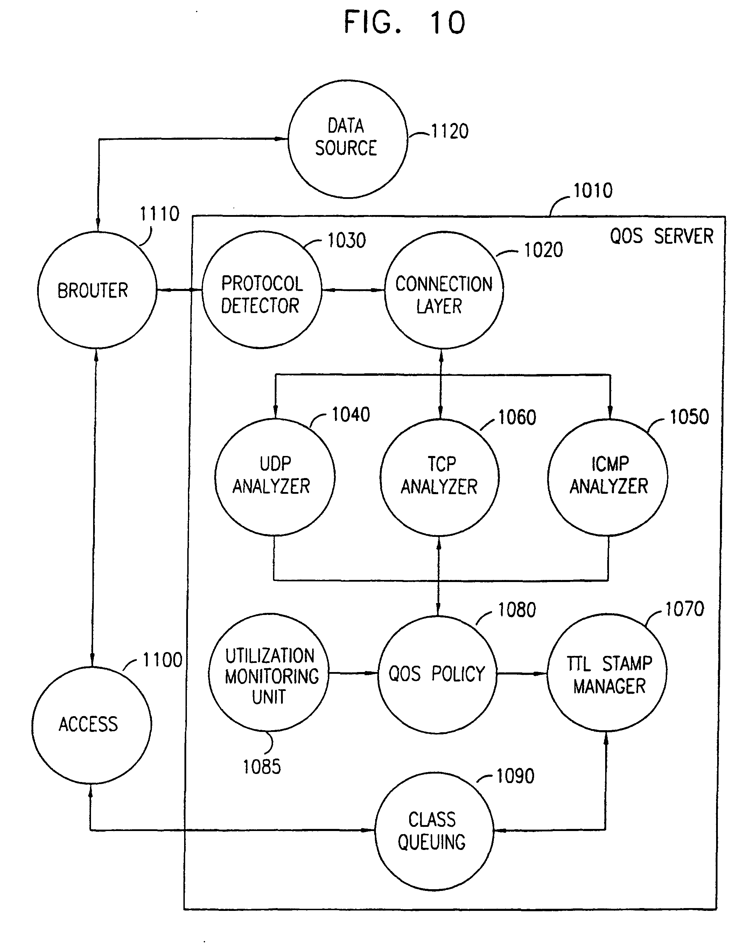

c. Provision of a quality of service agent, which preferably includes three levels: congestion avoidance, flow control and admission control, which operate symbiotically to provide maximal channel utilization. A description of one embodiment of a quality of service agent is provided below with reference to Figs. 10 - 14.

Alternatively, the quality of service agent may be constructed and operative in accordance with the description provided at www.faqs.org/rfcs, which describes a variety of quality of service engines. Alternatively, the quality of service agent may be a combination of some or all of the features described herein and some or all of the features described in one, some or all of the quality of service engines described at the above site.

For example, a preferred packet switched embodiment of the wireless local loop may include the following features:

a. Conversion of all formats of all information streams, into a single information format such as IP packet (datagram) format, using the MGCP standard to convert the voice stream.

b. Actual routing of packets is performed based on static routing/RIP (routing information protocol), a protocol defined in RFC Nos. 1721- 1724, posted at the IETF website, www.faqs.org/rfcs. Routing policy is determined in accordance with the MPLS (multi-protocol label switching) standard of quality of service based routing defined in RFC No. 2702, posted at the IETF website.

c. Provision of a quality of service agent, typically having the following characteristics:

i. the congestion avoidance characteristics of IETF RFC No. 2205, termed RSVP, in quasi-deterministic and deterministic situations,

ii. the congestion avoidance characteristics of the quality of service agent described hereinbelow with reference to Figs. 10 -14, in stochastic situations which are characteristic of WLL embodiments;

iii. the flow control characteristics of DiffSERV RFC No. 2475 and

iv. the admission control characteristics of the quality of service agent described hereinbelow with reference to Figs. 10 - 14.

The Quality of Service (QoS) part of the WipLL system that enables integrated services is generally divided into three major parts:

1. Network access filtering / forwarding;
2. QoS server; and
3. Air access classified queuing.

The network access part is amenable for the routing / bridging of the incoming data, in such a way that all traffic passing further into the system is destined for "over the air" addresses. The QoS server is responsible for traffic behavior, shaping, application recognition, and for the classified queuing that executes QoS policies. Fig. 10 illustrates global data flow within the system, from the network and to it.

There are 3 types of traffic in networks: Best Effort traffic; Profiled traffic and On-Demand traffic.

Best Efforts is traffic as is known today. The traffic goes out onto the network and it is hoped that it reaches its destination. as there are no bandwidth controls and no guarantees. In the future, the present invention envisages continuing to apply best efforts traffic characterization to, e.g., email and unimportant web traffic.

Profiled traffic has pre-defined rules/policies applied to it. These policies may include bandwidth limits, priorities, reservations, security and other controls that characterize this as 'special' traffic.

On-Demand traffic that requires new policies to be applied as the associated applications are loaded. An example might be an unscheduled video-conference.

All three traffic types are present in the WipLL system. Bandwidth shaping policies within the QoS Server (QoS-S) should reflect those application traffic types. Discussed below, are the different methods utilized by the QoS-S toward those traffic topologies.

As illustrated in Figure 10, the QoS server (1010) is constructed in the following way:

it identifies (1030) whether the incoming packet is a datagram (IP packet). In case it is not, it assigns it a TTL stamp by advising a policy image defined by the user, based on source / destination addresses, packet type (unicast, multicast or broadcast), etc.;

it analyzes the packet in 4th layer (Connection layer, 1020), and assigns the relevant policy; and

it recognizes a packet's generating application and assigns TTL (Time to Live, 1070) stamp.

As protocol (3rd layer) recognition (1030) is straight forward, let us discuss the connection layer analysis.

Note: connection layer analysis (1020) is performed for IP traffic only, i.e., UDP, ICMP and TCP protocols.

A preferred method of operation for units 1070, 1080 and 1090 of Fig. 10 is now described.

Typically, the apparatus of Fig. 10 serves a population of service providers, such as telephone companies, ISPs (Internet service providers), NAPs (network access providers), etc. each of which in turn serve a population of end users. Generally, the apparatus of Fig. 10 is operative to receive an IP-stream which includes a multiplicity of interleaved sessions, each session belonging to an individual one of several application service types such as video, voice, multimedia and internetworking. For example, the IP stream may comprise one or more packets from an individual telephone call followed by one or more packets from an individual data session, followed by one or more packets from the same telephone call, followed by one or more packets from a video session, and so on. Each session has a current grade of service which typically comprises a vector including some or all of the following components:

> a. Effective bandwidth;
> b. Maximal latency or maximal permitted delay;
> c. Maximal permitted IP packet loss rate, where a packet whose latency exceeds the maximal latency of (b) is considered lost.

The second two components are referred to together as the "delay component".

According to a preferred embodiment of the present invention, each session is represented by a complex vector whose real component corresponds to the session's effective bandwidth and whose imaginary component corresponds to the session's delay component.

Each service provider has its own requirements which it demands from the resources, i.e. from the local loop, for each session taking place within any of its application services. Typically, each service provider defines, for each application service, a threshold grade of service comprising threshold levels of at least some and preferably all of the above components.

The quality of service provided by the system of the present invention typically comprises a guarantee that once a session is established on behalf of a service provider, the grade of service of that session will never fall below the threshold grade of service selected by the service-provider, i.e. the threshold grade of service is maintained throughout that session. This allows coexistence of multiple application streams through the same resources. This is typically accomplished by refusing to initiate certain sessions.

The system of Fig. 10 preferably performs the following four tasks:

> 1. Analyzes incoming packets in order to identify each packet as belonging to one of a predefined set of applications (units 1040, 1050 and 1060 of Fig. 10).
> 2. Receiving a stream of updates regarding the current level of utilization of resources i.e. the congestion level, which determines what resources are available to assign to each incoming and existing packet. This is typically performed by a background process represented in Fig. 10 by utilization monitoring unit 1085.
> 3. Stamping each packet with a time-to-live (TTL) tag, indicating the amount of time the packet is allowed to remain undelivered. For example, telephony packets typically have a short time-to-live. Each packet's tag is a counter which counts down as time goes by. If the packet's tag reaches zero, the packet is rejected. This constitutes an IP packet loss. Task 3 is typically carried out by QOS policy unit 1080, which typically operates as follows:

> > a. Receives packets,
> > b. Identifies session initiation packets and rejects them if utilization is too great to accommodate new sessions within a particular application of the (unit 1070 of Fig. 10). Identifies session termination packets and records that the relevant session has terminated.
> > c. Assigns a TTL stamp to all non-rejected session initiation packets and to all packets other than session initiation packets, and
> > d. Transferring all packets bearing a TTL stamp to unit 1070 for counting down.

> 4. Streaming the packets into the communication channel, i.e. assigning resources to the packets, prioritizing by TTL, such that lower TTL packets go first (unit 1090).

A preferred method by which unit 1080 assigns a TTL stamp to a given packet comprises the following steps:

> a. Initially, assign the largest possible TTL stamp, determined by the service provider-selected maximal latency, to the packet.
> b. Using the known bandwidth or worst-case bandwidth of the packet (which is the largest bandwidth which might be used by the application service to which the packet belongs), simulate the entry of the packet into the communication channel to determine whether its entry causes any existing sessions to violate its requirements by failing to provide at least one component of its threshold grade of service.

c. If entry of the packet, even at largest possible TTL, does cause at least one existing session to violate its requirements, then:

> If the packet is a session initiation packet, drop the packet.
> If the packet is an in-session (payload) packet or a session termination packet, stream the packet into the communication channel, ensuring that its TTL is larger than that of any existing packet, i.e. if its TTL is smaller than or equal to that of any existing packet, change its TTL to an "illegal" value which exceeds the TTLs of all existing packets.

> In the background, i.e. not merely temporally between steps (c) and (d), unit 1085 accumulates a histogram evidencing the distribution of the current level of available resources, i.e. stores information regarding the relative frequencies of each level of available resources.

d. If entry of the packet, at largest possible TTL, does not cause even one existing session to violate its requirements, then:

> i. Identify the location, within the resource availability histogram, of the current resource availability level.
> ii. Select a time window, which is of the same order of magnitude of the largest possible TTL.
> ii. Identify the set of potential locations, within the resource availability histogram, of the resource availability level in the next time window. The set is an ellipsoid having area S and including two subareas Sg and Sl. Sg is the area of the set of locations, within the ellipsoid, which correspond to greater levels of resource availability than the current level. Sl is the area of the set of locations, within the ellipsoid, which correspond to lower levels of resource availability than the current level.
> iii. Compute Sl/S which is the expected blocking probability, i.e. the expected probability of lacking resources.
> iv. Given the Erlang for each application service type supported by the apparatus, compute the median threshold grade of service (MTG) as follows:
> > MTG = the sum of the threshold grades of service of all application service types, weighted respectively by their individual Erlangs, divided by the sum of Erlangs.
> v. If Sl/S < MTG, assign minimum TTL to the packet, where the minimum TTL is a function of the hardware limitations of the system.
> > If Sl/S >= MTG, retain the packet's original TTL value, i.e. the largest possible TTL stamp, determined by the service provider-selected maximal latency.

A preferred method by which unit 1070 determines whether or not to reject session initiation packets is as follows. As indicated above, the criterion for rejection is whether or not current utilization is too great to accommodate new sessions within a particular application service type. This may, for example, be implemented, by obtaining from each service provider a utilization threshold for each application service type determining the point from which further sessions of that type are rejected.

**UDP analysis (1040)**

The User Datagram Protocol (UDP) makes available a datagram mode of packet-switched computer communication in the environment of an interconnected set of computer networks assuming that the Internet Protocol (IP) is used as the underlying protocol.

UDP provides a procedure for application programs to send messages to other programs with a minimum of protocol mechanism. UDP is transaction oriented, and does not guarantee delivery and duplicate protection. Applications requiring ordered reliable delivery of streams of data should use the Transmission Control Protocol (TCP). Every application using UDP has to assign a port number for itself. All port numbers are unique (there is a one to one mapping between application and its port number). Applications that operate at a session type connection are obligated to introduce three port numbers. Assume some host A communicates to host B, via a VOIP application. The application at A has generated a session initialization datagram having a specific port number recognizable to the application at B as a session generation packet. B replies with a session datagram having some other port number - this is already a port number that specifies a session packet of the passive host B (a session port number). At this point, the session is established, and A communicates to B using a third port number, defining the active connection side. When one of the hosts terminates the session, a session closure datagram containing the first port number is sent.

UDP has three major disabilities: it does not carry any information regarding flow or congestion control, Session Packets reordering is not tolerated and no connection layer correction mechanism is present.

When a UDP datagram is identified, the QoS-S operates in the following way:

it identifies the application by using its port number;
it checks whether this packet belongs to an already open session by comparing port numbers and session's participant's IP addresses;
in an open session, it stamps the packet with a TTL from the applications lookup table;
in a new session, it advises with the policy agent to determine whether this session is allowed to initiate. The policy agent utilizes the following items: network load (air), median air latency, application's required bandwidth, and hosts access rights.
it informs the MAC on the application's covenant, in terms of CS air MAC-address; and
it informs the MAC about session end events (session end, or session failure).

**ICMP analysis (1050)**

The IP is used for host-to-host datagram service in a system of interconnected networks called the Catenet. The network connecting devices are called Gateways. These gateways communicate between themselves for control purposes via a Gateway to Gateway Protocol (GGP).
Occasionally a gateway or destination host will communicate with a source host, for example, to report an error in datagram processing using the Internet Control Message Protocol (ICMP). ICM, uses the basic support of IP as if it were a higher level protocol, however, ICMP is actually an integral part of IP, and must be implemented by every IP module.
ICMP messages are sent in several situations e.g., when a datagram cannot reach its destination, when the gateway does not have the buffering capacity to forward a datagram, and when the gateway can direct the host to send traffic on a shorter route. IP is not designed to be absolutely reliable. The purpose of these control messages is to provide feedback about problems in the communication environment, not to make IP reliable. There are still no guarantees that a datagram will be delivered or a control message will be returned. Some datagrams may still be undelivered without any report of their loss. Higher level protocols that use IP (UDP or TCP) must implement their own reliability procedures if reliable communication is required.
ICMP messages typically report errors in the processing of datagrams. To avoid the infinite regress of messages about messages etc., no ICMP messages are sent about ICMP messages. Also ICMP messages are only sent about errors in handling fragment zero of fragmented datagrams. (Fragment zero has the fragment offset equal zero).
In the ICMP QoS-S operational mode:

the user assigns the ICMP packet with default TTL (Time-to-Live). The system default setting is equivalent to the shortest TTL possible - any communication between a gateway and a host is time critical, as most ICMP traffic is generated when queue congestion occurs within a gateway (or beyond it);
the access system, i.e., the MAC protocol delivers this packet (ICMP packet loss can lead to temporal queue distillation within the gateway, even for running applications); and
QoS-S checks the depth of the access queue. Long queues (long is defined in terms of median access latency within the queue) are petrified to lower queue's exhaustion. The QoS-S rejects new sessions (those sessions that are allowed to be rejected are defined by the user) for that relaxation period. However, before rejecting sessions, flow control can be implemented for TCP/IP traffic. In most cases this effects the required queue relaxation.

**TCP analysis (1060)**

TCP provides connection-oriented services for the protocol's application layer i.e. the client and the server must establish a connection to exchange data. TCP transmits data in segments encased in datagrams, along with checksums used to detect data corruption, and sequence numbers to ensure an ordered byte stream. TCP is considered to be a reliable transport mechanism because it requires the receiving computer to acknowledge not only the receipt of data but its completeness and sequence. If the sending computer does not receive notification from the receiving computer within an expected time frame, the segment is retransmitted. TCP also maintains a flow control window to restrict transmissions. The receiver advertises a window size, indicating how many bytes it can handle.
TCP provides the following reliability checks:

acknowledges receipt of packets;
retransmits when dropped packets are detected;
re-sequences segments, if necessary, if they arrive out of order;
tosses packets if data became corrupt during transmission;

EP 1 138 137 B1

discards duplicate segments; and
maintains flow control to manage a connection's transmission rate.

**The Bandwidth challenge**

TCP/IP was primarily designed to support two traffic applications - FTP and Telnet. With the growth of the Internet, network applications and user expectations have changed. Today, with more high-speed users, and bursty, interactive Web traffic, greater demands are placed on networks, causing delays and bottlenecks that impact a user's quality of service. Many of the features that make TCP reliable, including retransmitting when the network "cloud" drops packets or delays acknowledgment, and backing off when it infers congestion exists, contribute to performance problems.

Conventional TCP bandwidth management uses indirect feedback to infer network congestion. TCP increases a connection's transmission rate until it senses a problem and then it backs off It interprets dropped packets as a sign of congestion. The goal of TCP is for individual connections to burst on demand to use all available bandwidth, while at the same time reacting conservatively to inferred problems in order to alleviate congestion.

TCP uses a sliding window flow-control mechanism to increase the throughput over wide-area networks. It allows the sender to transmit multiple packets before it stops and waits for an acknowledgment. This leads to faster data transfer, since the sender doesn't have to wait for an acknowledgment each time a packet is sent.

The sender "fills the pipe" and then waits for an acknowledgment before sending more data. The receiver not only acknowledges that it received the data, but it advertises its window size i.e. how much data it can now handle.

TCP's slow-start method attempts to alleviate the problem of multiple packets filling up router queues. TCP flow control is typically handled by the receiver, which tells the sender how much data it can handle. The slow-start method, on the other hand, uses a congestion window, which is a flow-control mechanism managed by the sender. With TCP slow-start, when a connection opens only one packet is sent until an ACK is received. For each received ACK, the congestion window increases by one. For each round trip, the number of outstanding segments doubles, until a threshold is reached. In summary, TCP uses flow control, determined by client and server operating system configurations, distances, and other network conditions. QoS-S provides rate control, explicitly configured in user-defined policies.

**Bandwidth management approaches**

When faced with bandwidth constraints, a number of solutions are available including:

Using Queuing Schemes on Routers:

Class queuing: and
Defining Precise Control - The QoS-S Solution.

**Queuing Schemes on B/Routers**

For the most part, network devices have kept pace with evolving high-speed technology. Routers provide queuing schemes e.g. WFQ, priority output queuing, and custom queuing that attempt to prioritize and distribute bandwidth to individual data flows so that low-volume applications, such as interactive Web applications, don't get overtaken by large data transfers, typical of FTP traffic.

B/Router-based queuing schemes have several limitations:

B/Routers manage bandwidth passively, tossing packets and providing no direct feedback to end systems;
B/Routers can only use queuing--that is, buffering and adding delay--or packet tossing, to try to control traffic sources;
B/Router queuing is uni-directional--outbound traffic only;
Queuing results in chunkier traffic and erratic performance because multiple, independent TCP sources compete for bandwidth, ramping up and backing off; and queues accumulate at the access link. Queuing, especially WFQ does not work well for chunky flows because packets arriving in chunks tend to be discarded;
B/Routers don't allow setting guaranteed rates for specific traffic type; and
B/Routers can't prevent "brown-outs"--that is, they don't provide admissions-control policies to dictate what happens when a link is over-subscribed.

**Class Queuing**

As the access mechanism of the WipLL system differs from the network 2nd layer (Ethernet), queuing is inevitable. In order to maintain 4th layer decisions (within the QoS server), ordered "licking" is expected from the queues. This is done by assigning an interface header between the 4th and the 2nd layers for each arriving packet. This header contains information regarding packet's TTL and transmission policy (described later).

**Defining Precise Control - The QoS-S Solution**

Traffic, by nature, consists of chunks of data that accumulate when multiple independent sources of data are combined. These data chunks tend to form at access links where speed conversion is handled.
Imagine putting fine sand, rather than gravel, through a network pipe. Sand can pass through the pipe more evenly and quickly than chunks. QoS-S conditions traffic so that it becomes more like sand than gravel. These smoothly controlled connections are much less likely to incur packet loss and more importantly, the end user experiences consistent service.
Where TCP relies on indirect network feedback from tossed packets to infer congestion, QoS-S provides direct feedback to the transmitter by detecting a remote user's access speed and network latency and correlating this data with aggregate flow information. This results in smoothed traffic flow.

**How QoS-S works - Rate Control vs. Flow Control**

The QoS-S maintains state information about individual TCP connections, giving it the ability to provide direct, quality-of-service feedback to the transmitter. In addition, the user can define QoS-S policies to explicitly manage different traffic classes and partition bandwidth resources to meet his business needs. As a result precise control of service levels is gained. QoS-S, as described in this invention, provides several key functions that differentiate it from other bandwidth-management solutions:

it controls the end-to-end connection, eliminating burstiness, so users experience smooth, even data displays;
it classifies traffic for precise control (QoS-S classifies by a specific application) and encapsulates a QoS header; and
it allocates bandwidth according to user-defined policies.

**How QoS-S TCP rate control works**

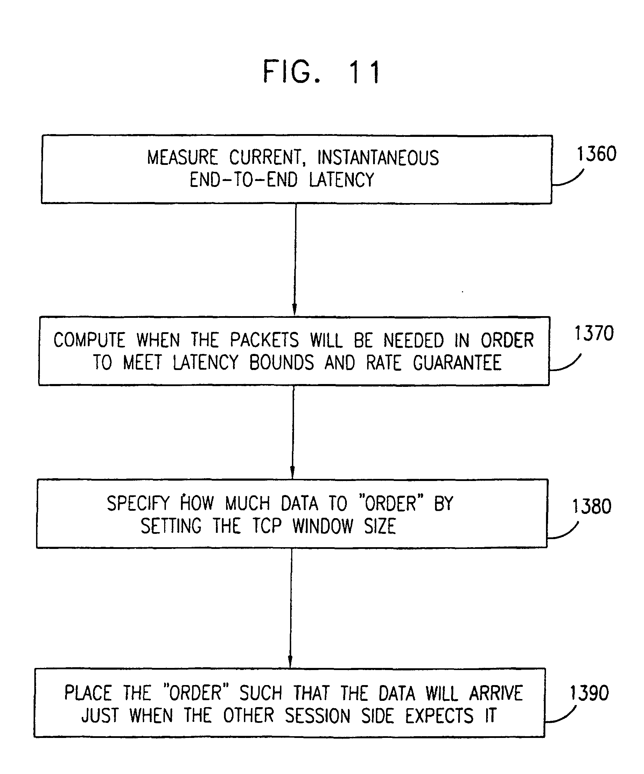

TCP rate control is very similar in concept to the "just-in-time" product flow control used in manufacturing plants. TCP rate control performs the following steps as shown in Fig. 11:

measures current, instantaneous end-to-end latency (done within the datagram) to know how long it will take for a packet to arrive once we "place an order" (1360);
computes when the packets will be needed in order to meet latency bounds (latency in terms of flow control factor, rather than time-sensitivity factor) and rate guarantee (1370);
specifies (within packet TCP header) how much data to "order", by setting the TCP window size (1380); and
places the "order" in the appropriate time so that the data will arrive just when the other session side expects it, e.g. releases ACK (1390).

**Controls of the End-to-End Connection**

QoS-S uses two methods to control the rate of TCP transmissions:

it detects real-time flow speed and then delays acknowledgments going back to the transmitter; and
it modifies the advertised window in the packets sent to the transmitter.

QoS-S changes the end-to-end TCP semantics from the middle of the connection. It computes the round-trip time (RTT), intercepts the acknowledgment, and holds onto it for amount of time that is required to smooth the traffic flow without incurring retransmission (RTO). It also supplies a window size that helps the sender determine when to send the packet. This rate-control mechanism is illustrated in Fig. 11 and in the following flow example.

**A QoS-S Data-Flow Example**

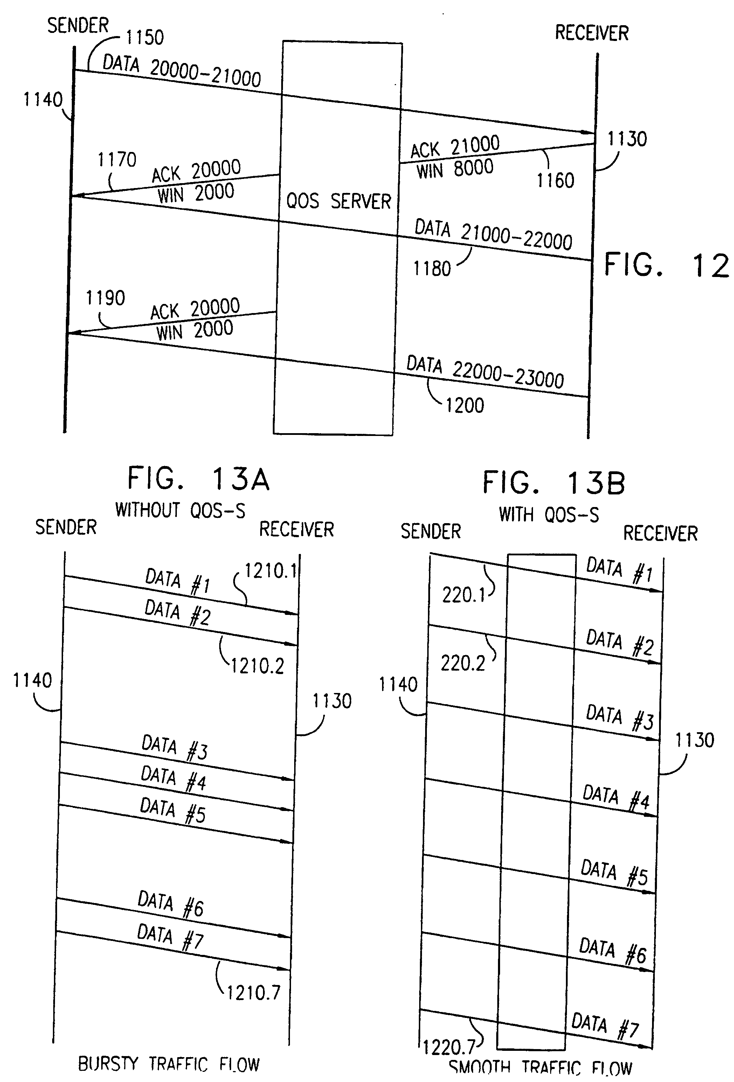

Figure 12 shows how QoS-S (1010) intervenes and paces the data transmission to deliver predictable service. The following steps trace the data transfer shown in figure 11:

A data segment (1150) is sent from the sender (1140) to the receiver (1130).
The receiver acknowledges receipt and advertises an 8000-byte window size (1160).
QoS-S intercepts the ACK and determines that the data must be more evenly transmitted otherwise subsequent data segments will queue up and packets will be delayed because insufficient bandwidth is available, as defined by this flow's policy.
QoS-S sends an ACK (1170) to the sender, computed to arrive at the sender to cause the sender to immediately emit data, i.e., ACK sequence number plus the window size, which allows the sender to transmit an additional packet (1180). Then the QoS-S sends another ACK (1190) to the sender which allows the sender to send packet (1200) to the receiver without congestion. Thus Smooth Traffic Flow is achieved with QoS-S.

Without the benefit of QoS-RDC, multiple packets are sent; an intermediate router queues packets; and when the queue reaches its capacity, the router tosses packets, which must re-transmitted. Figures 13A and 13B show bursty traffic (1210.1...1210.7) when QoS-S is not used, and even data transmission (1220.1...1220.7) under the control of QoS-S.

However, independent of access-link congestion problems, traffic chunks are more prone to loss packet than evenly spaced traffic.

**Classifies Traffic for Precise Control**

QoS-S uses a hierarchical tree structure to classify traffic. The user identifies the traffic types to be controlled, such as traffic from a particular application. The user need not classify all network traffic, only the traffic requiring QoS. QoS-S classifies a traffic flow by traversing the traffic tree, attempting to match the flow to one of the classes defined by the user. The final step in the classification process maps a flow to a policy which defines the type of service this traffic class has to receive e.g. a guaranteed rate.

The QoS-S traffic classification function :

provides a classification for specific applications;
maintains a traffic class hierarchy to manage priorities and enables policy inheritance; and
orders traffic classes automatically (by TTL, for the queuing phase).

**Controlling Admissions**

The user defines what happens if a traffic class's total guaranteed rate is used up. If the next connection for a class needs a guaranteed rate and no bandwidth is available, QoS-S can handle the bandwidth request by either refusing the connection, or squeezing the connection into the existing bandwidth pipe.

**Scaling Bandwidth to Connection Speed for Efficient Bandwidth use**

QoS-S monitors a connection's speed and adjusts bandwidth allocation as the speed changes. Low-speed connections and high-speed connections can be assigned guaranteed rates so that QoS-S can scale bandwidth usage accordingly. For example, during a typical Web session, the wait period between clicks doesn't consume bandwidth, QoS-S frees up this unused but otherwise unavailable bandwidth to satisfy other demands, such as TBS (VOIP, MPEG, etc.).

**Prioritizing Bandwidth Allocation**

Priority-based policies are preferred for traffic that doesn't require a reserved guaranteed rate, but are still preferably managed along with competing traffic. The user assigns a priority (0-255) to a traffic class so that QoS-S can determine how to manage the aggregate flow. The user doesn't have to classify all traffic. Any traffic that was not classified is treated as priority-based traffic with a "default priority".

**QoS-S Bandwidth Allocation Order**

QoS-S uses the policies defined to determine how to allocate bandwidth. When determining bandwidth allocation, QoS-S takes into account all bandwidth demands, not just the individual traffic flows.

**Classified Queuing (1090)**

All packets are stamped with a TTL (1070) parameter. Stations are expected to order all packets for transmission in TTL ascending order, sending the lowest TTL first.

The basic approach is that (logically) packets arriving (along with their time-to-live stamp) to the transmit-queue cluster, are assigned to the queue according to their time-to-live indicator. As applications are consistent in assigning time-to-live stamps to their outgoing packets, packets from the same application will not be reordered. The reordering will occur between applications, and this is a do-not-care case.

On a continuous basis, as a background task, packets are expected to be deleted from the queue if their updated time-to-live become zero, with one exception - TCP datagrams. As explained above, TCP datagrams contain session control information, and losing this data will lead the application losing bandwidth. Thus the QoS-S should indicate to the MAC queuing handler whether or not the packet should be discarded upon TTL vanishing.

The MAC (air access) coordinator located in the base station (default gateway of the wireless segment) grants remote units (EPUs) access to the air domain. The MAC coordinator allocates its remote units basing on their "urgency" to transmit. This "urgency" parameter is a combined factor of queue length and TTL distribution within it, computed by each remote unit.

Classified queuing satisfies two system goals:

station queue priority resolution, i.e., prioritization between applications generated over the same remote unit; and normalization of channel starvation magnitude between remote units for optimal channel time allocation.

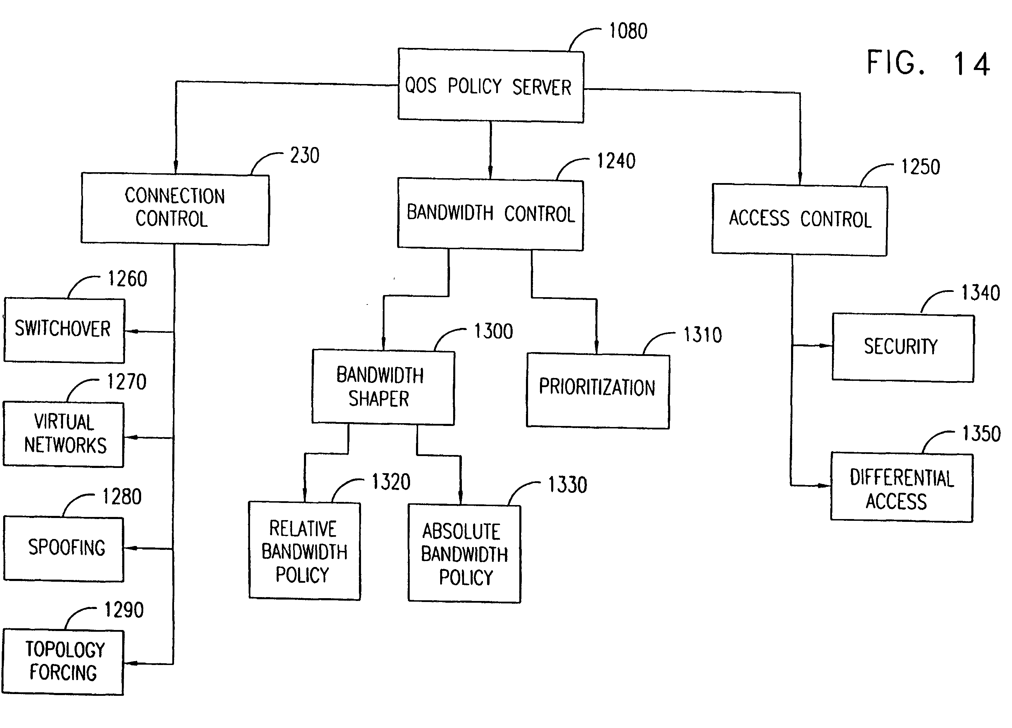

Thus as described hereinabove, the QoS server is responsible for network and application layers policies execution including analyzing each incoming packet, detecting its session, evaluating channel load, performing flow control operations (such as delaying packets, intervening into the connection layer, etc.) and attaching a QoS header (over the air) to a packet describing the packet's boundary conditions (such as retransmission criteria, TTL, etc.), as illustrated in Fig. 14.

A method for performing Queue Weighting and Specific Frequency Computations in accordance with a preferred embodiment of the present invention is now disclosed.

**1. 1.1.1. Access Parameter Set - Definition**

The CC will acquire the following list of parameter set. For each parameter it will be specified how the CC received the parameter and how he updates him.

1) Fragment Error Rate $fer_j$.
Notes:

1.1 this parameter is to be computed by the CC. See clause (8.3.3).
1.2 The CC update $fer_j$ after each polling.

2) The Basic Channel Assignment $bch_j$.
Notes:

2.1 The Network manager assigns this parameter.

3) The channel usage $b_j$
Notes:

3.1 This parameter computed by the CC, see clause (8.3.5).
3.2 The CC updates $b_j$ after each Polling.

4) Time passed from the last Poll-Tx time :

$$(1.3) \qquad t_0 - t_{last}$$

Where $t_0$ is the current Time.

Notes:

    4.1 This parameter computed by the CC.
    4.2 The CC will update this parameter after <u>each</u> Polling.

5) Time To Live of the HOL packets in the station's queue: $TL^1_j$.

Notes:

    5.1 The Time to stamp delivered in the CS Poll_ACK and in the PRD see (8.4.3).
    5.2 The CC will update $TL^1_j$ after <u>each</u> Polling.

6) Packet length of the HOL packet in the station's queue: $Plength^1_j$

Notes:

    6.1 The HOL Packet lengths delivered in the CS Poll_ACK and in the PRD see (8.4.3).
    6.2 The CC will update $Plength^1_j$ after polling the j station.

7) Queue weighted average of the TLs: $\langle TL \rangle_j$:

$$(1.4) \quad \langle TL \rangle_j := \sum_{i=2}^{Q_j} (aMaxTL - TL'_j) * \max\left(1, \sum_{i=2}^{Qj} \left\lfloor \frac{TL_{CR}}{TL'_j} \right\rfloor\right) * Qlength_j$$

Where: $TL_{CR}$ stands for a critical Time to Live and is management MIB item. aMaxTL stand for the maximum Time To Live stamp allowed and is also a MIB item.
$Qlength_j$ Is the number of packets in the queue of station j

Notes:

    7.1 The queue weighted average computed by the CS's.
    7.2 The CS's will update $\langle TL \rangle_j$ as a background task.
    7.3 Because the $\langle TL \rangle_j$ parameter could be very large number the CS will not delivered him in exact manner. The number that the CS send to the CC in the CS Status field is called basic specific frequency.(see next paragraph)

8) The Basic specific frequency $basicf_j$ :
    This parameter represents the urgency of the station to transmit data, the parameter is actually the Queue weighted average writing in 16 bits field.
The operator, that translate $\langle TL \rangle_j$ to the $basicf_j$, is described in section 8.4.3.

Notes:

    8.1 The $basicf_j$ will be delivered in the CS Status field ofthe CS *PHYHeader.*
    8.2 The CC will update $basicf_j$ after Polling the j station

9) The specific frequency $f_j$.
    The specific frequency defined as the relative urgency for a station to transmit, normalized to its basic channel usage.
    The specific frequency computed by the CC according to the following formula.

$$(1.5) \ f_j = \left(\frac{1}{Max(1, b_j)}\right) * basicf_j$$

When: $b_i$ Number of transferred bits in sliding window see Eq. (1.2). <u>Notes:</u>

> 9.1 This parameter computed by the CC.
> 9.2 The CC will update $f_j$ according to clause 8.4.3.

10) The CS's shall be divided by the CC to three functional categories:

> <u>Associated and Active:</u> if all the CS parameters are differ then null and the CS is Associated.
> <u>Association and non-Active:</u> if all the CS parameters are nulled and the CS is Associated.
> <u>Not Associated:</u> If the CS is not responding for *NRP* (Not Responded Polling) times the CC will consider this CS as Non associated.

10) Conditional parameters: see MIB list in chapter 11.

## 2. Specific frequency Computation.

### a) *Basicfj* computation.

The CS's compute the Queue weighted average $\langle TL \rangle_j$ in a background task, when the CS get Poll-Tx he delivered the $\langle TL \rangle_j$ in the 16 bit SPF field. A 16-tit field that specified to contain this parameter value. In order it not to exceed its field length a placement procedure defined below.

The procedure of writing the $\langle TL \rangle_j$ in 16 bit field is as followed:

Step 1: In the first 5 bit write a number x that fulfill the condition: The nearest power of $2(2^x)$ that is still smaller than $\langle TL \rangle_j$.

Step 2: In b5 write 1 if: $2^x + 2^{x-1} < \langle TL \rangle_j$.
or write 0 if: $2^x + 2^{x-1} > \langle TL \rangle_j$.

Step 3: In b6 write 1 if: $step2 + 2^{x-2} < \langle TL \rangle_j$
or write 0 if: $step2 + 2^{x-2} > \langle TL \rangle_j$

Step n: In b(n+3) write 1 if: $step(n\text{-}1) + 2^{x-n+1} < \langle TL \rangle_j$
or write 0 if: $step(n\text{-}1) + 2^{x-n+1} > \langle TL \rangle_j$
Until n=12 or $x\text{-}n+1=0$

So the CC will have the following number as the *basicf$_j$*:

$$(1.6) \quad basicf_j = \sum_{k=1}^{\substack{k=12 \\ or \\ k=x}} 2^x + b(k+4) * 2^{x-k}$$

## b) Specific frequency Computation.

As specified above, the specific frequency of a station (CS) represents from the MAC standpoint, the CS's urgency to access the channel and consequently perform a packet or control transaction.

For the non-active CS's the CC, will assigned $f_j = 0$ until the time passed from the last Poll-Tx exceed the value of $t_{nock}$ (a MIB item) then the CC assigns $f_j = 10^{10}$ (i.e., this value serves as an out-of-consideration flag).

For the non-associated CS's the CC, will assigned $f_j = 0$ until the time passed from the last Poll exceed the value of $t_{nc}$ then the CC is assigned $f_j = 10^{10}$.

For the active CS's the CC will update the specific frequency in the following way:

After polling the j station the CC will update here basic specific frequency.

If the new basic specific frequency is larger then the old one the CC will update <u>all</u> the basic specific frequency's according to the following equation:

$$(1.7)\ basicf_{jnew} = basicf_j * \frac{basicf_{All}^{new}}{basicf_{All}^{old}}$$

Where the index All represent the Polled CS.

The specific frequency will be then:

$$(1.5)\ f_j = \left(\frac{1}{Max(1, b_j)}\right) * basicf_j$$

The CC will update the specific frequency of <u>all stations after each poll</u>.

<u>Note:</u>

For the CC station $basicf_{cc} = \langle TL \rangle_{cc}$

**Preferred Rules for determining TTL are now described.**

**Building rules for analyzing packets:**

Criteria for analyzing IP packets are used to define types of rules a user might want to create (or use from a predefined set of rules) in order to control TTL values for packets on a network. Besides defining possible criteria, it is defined how such rules will set TTLs for a packet which answers to more than one criterion, and whether each rule will set an absolute value of TTL or a scheme with some kind of increments and decrements based on various criteria will be deployed.

The rules are preferably defined according to some MIB and used by a user through Network Management software. There are many predefined rules and ability for the user to create additional complex rules. Each rule will in some way assign a TTL value to packets that meet some well-defined criterion.

There are many different possibilities to arrange interaction between different rules and TTL values in such an environment. The following is a list of some distinctions and possibilities concerning which decisions should be made.

- One problem is defining a TTL value for packets that meet no criteria defined in existing rules. It seems convenient to solve this problem by having default TTL value to be used every time a packet is found which meets no criteria at all.
- However, we must decide on whether one such default TTL value is used for all "undecided" packets, or there should be a default value for each higher-level class of packets. For example, consider a packet which is found to be a TCP packet, yet it matches no existing rule for TCP packets based on port numbers or otherwise. In case there's a default TTL value for all TCP packets, this packet would be assigned such a value instead of the global default TTL value.
- Since there are many different criteria to check for assigning TTLs to packets, it is important to understand how a TTL value is going to be assigned to a packet which meets several rules in existing database. For example, consider a packet which meets a criterion based on its IP source address, and according to the rule it should be assigned TTL A, and it also meets a criterion based on its TCP port number, and according to that rule it should be assigned TTL B. We must decide on which TTL the packets gets after all. The easiest way out seems to be to assign the packet the lowest TTL value among those found in rules it matches. Another possibility is that the latest matching rule sets the TTL, and then order of rules in the database matters and should be determined accordingly; another possible scenario, perhaps more intuitive, is that the earliest matching rule sets the TTL. Yet another possible scenario is that every rule has a flag which a user can set which, if set, means "stop searching for other matching rules if this rule matches and assign the TTL." Then the process of assigning TTLs could proceed by searching more and more matching rules until it either meets a rule with this flag set or there are no more matching rules and it uses the last one.

There are different ways to look at the TTL value for certain rules and its relation to the default TTL value of its "parent class" or the global default TTL value. A TTL value for a certain rule can be an absolute one, or it can be specified as a relative value from the default value of this packet's class. In former case, for example, if there's a rule for TCP packets with port number 80 getting TTL 5, all such packets would get TTL 5; in the latter case, if such a letter specifies TTL -3, then all such packets get TTL equal to the default TTL for TCP packets (see above) minus 3. The former scheme has the advantage of clarity: it is immediately clear which TTLs are assigned in which rules, and these TTLs do not depend on each other. In the latter case, however, there's the advantage of consistency: for example, if a user wants to lower TTL values for *all* TCP packets, it is enough to lower the TTL value

for default TCP packets, and all TTLs for all other rules for TCP packets will automatically be updated because they are relative and not absolute.

Preferably another kind of rule is employed, an ability for a user to set that for some kind of packets (for example, all TCP packets), the TTL value assigned by the database should only be used for reordering packets in outgoing queues, but should not ever be used for dropping a packet. It should be discussed how this functionality should be achieved in a convenient and intuitive way for a user; one possible solution is to simply add a flag to each rule, which, if set by a user, means "tell MAC to never drop this packet if it matches this rule". It also must be noted, that in case a packet meets several rules and one of the TTLs Is picked for it according to possibilities described earlier, the packet should get this special flag (a directive to the MAC to never drop it) if at least one matching rule for it specifies this flag, even if this rule doesn't give the final TTL for this packet.

**Admission Control (Admin)**

As defined above, the admission control function is defined herein: Acceptance or denial of session generations. The admission function has to stipulate between incoming sessions and the on-going wireless channel conditions.

The following state vector can schematically represent the air channel: Bandwidth, BER (FER), Channel occupancy and number of active nodes. While the different application sessions can be described as following: Required bandwidth (which can be static or dynamic), maximal latency and max permitted Packet loss rate (which again, can be static or dynamic).

Access engine shall periodically provide to the admission control entity a channel occupancy parameter (COP) which is a unique grade describing the ability of the MAC to support additional sessions, at current time. In turn the admission entity assembles a session permission table, having the following structure,

| Application Ident. | Prime availability | Secondary availability | .... | Lowest availability |
|---|---|---|---|---|
| H.323 | # Sessions | 0 | .... | 0 |
| FTP | # Sessions | # Sessions | .... | # Sessions |
| .... | .... | .... | .... | .... |
| .... | # Sessions | # Sessions | .... | # Sessions |

Different availability classes delineate the fact that distinct application sessions may be services at dissimilar grades of services (while some may not). The dash between grade of services stated above (for a given application), are being outfitted via assignment of different TTLs to the session's packets, i.e., grater TTL values for lower quality sessions.

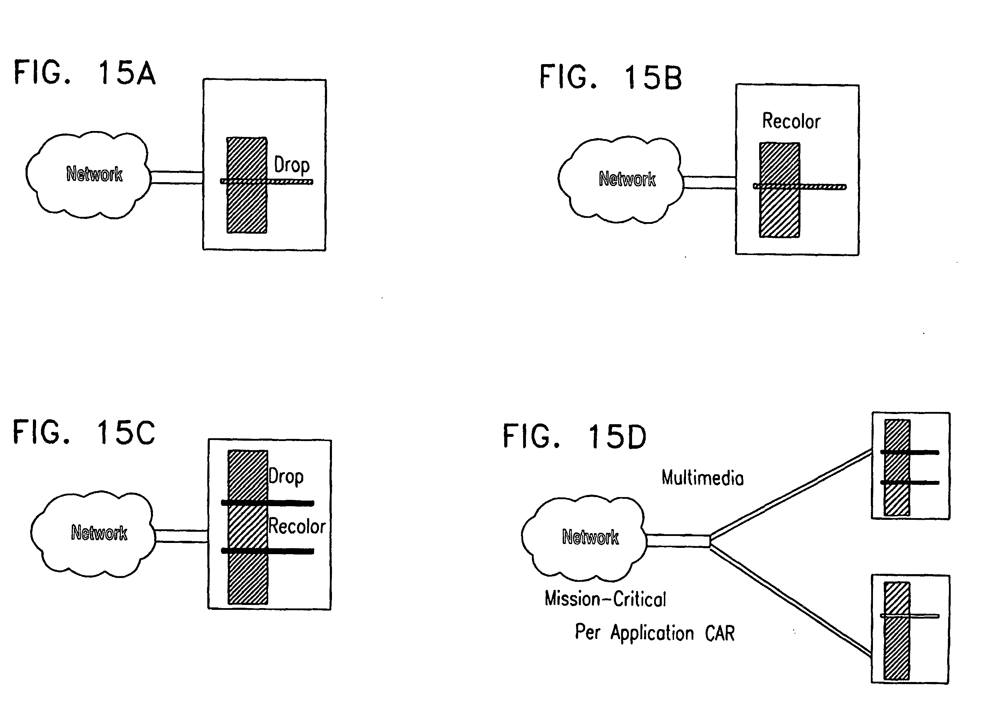

Thus, admitting new incoming session correspondingly, by denying or permitting a session to be spawn, and stamping its further packets accordingly. The charts of Figures 15A - 15D, illustrate the different policy attributes that can be presumed (column bar, represents system load).

In turn, the admission control entity typically updates the above admission table based upon its pre-assigned policy decisions.

As from the stated above, the admission control entity shall correlate its actions with the WRED method being practiced within the access realm. As WRED avoids tail drop synchronization for a given network application, the admission control is to provide the regulatory thresholds for it, assuming the above table. A question can be asked: as admission control is performed by application level, what is the added value the WRED contributes to system's QoS? (or the other way around). The answer to that argument is specified as follows:

1. Tail drop events occurs over non-time sensitive applications, i.e., as real-time application can not suffer spatial starvation - by definition, and this is solved by the admission control functionality.

2. Admission control entity, cannot take into consideration the spontaneous workload fluctuations of the non real-time applications. Thus, basing solely on the ADMIN to provide the bounded flow control over such flows, will lead to an "under subscription" for those applications in a given channel constellation. Thus, by providing the ADMIN to ingress all such applications into the access domain and letting WRED perform tail-flow control, will convey best channel concentration, in terms of number of simultaneously open channels.

It is appreciated that the software components of the present invention may, if desired, be implemented in ROM (read-only memory) form. The software components may, generally, be implemented in hardware, if desired, using conventional techniques.

It is appreciated that various features of the invention which are, for clarity, described in the contexts of separate embodiments may also be provided in combination in a single embodiment. Conversely, various features of the invention which are, for brevity, described in the context of a single embodiment may also be provided separately or in any suitable subcombination.

It will be appreciated by persons skilled in the art that the present invention is not limited to what has been particularly shown and described hereinabove. Rather, the scope of the present invention is defined only by the claims that follow:

**Claims**

1. A wireless local loop system comprising:

   a data network (40; 95)/PSTN gateway unit (30);
   at least one data line;
   at least one base station (10) connected to the gateway unit via said at least one data lines respectively;
   a multiplicity of wireless subscriber units (60) communicating wirelessly with the base station, each wireless subscriber unit comprising at least one interface to at least one host including a telephone host,
   the system being **characterised in that** each subscriber units comprises:

   an analog converter operative to translate incoming information in IP packet format into analog voice representation and to feed said analog voice representation to the telephone host, and to receive incoming analog voice information from the telephone host, to translate said incoming analog voice information into IP packet formatted information and to feed said IP packet formatted information to the base station; and
   a packet switcher operative to perform packet switching on IP packets arriving from the base station connected to the subscriber unit, including routing IP packets for hosts other than the telephone host to those hosts and routing IP packets for the telephone host to the analog converter;

   and wherein said base station is operative to perform packet switching on incoming IP packets based on an IP destination address included in each said incoming IP packet;
   and wherein said gateway unit is operative to switch incoming data packets onto the data network, to translate incoming voice packets from IP packet format into analog voice representation and to switch said analog voice representation onto a PSTN (50).

2. A system according to claim 1 wherein each host comprises one of the following group of host types:

   a telephone;
   a telefax;
   a computer;
   a data modem; and
   a cable modem.

3. A system according to claim 1 wherein said at least one data lines comprise wired data lines.

4. A system according to claim 1 wherein the data network comprises the Internet (95).

5. A wireless local loop method comprising the steps of:

   providing a data network (40; 95)/PSTN gateway unit (30), at least one data line, at least one base station (10) connected to the gateway unit via said at least one data lines respectively and a multiplicity of wireless subscriber units (60) communicating wirelessly with the base station, each wireless subscriber unit comprising at least one interface to at least one host including a telephone host,
   the method being **characterised by** the steps of:

   providing a subscriber unit comprising an analog converter operable to translate incoming information in IP packet format into analog voice representation and to feed said analog voice representation to the telephone host, and to receive incoming analog voice information from the telephone host, to translate said incoming analog voice information into IP packet formatted information and to feed said IP packet formatted information to the base station; and

performing packet switching on IP packets arriving from the base station connected to the subscriber unit, including routing IP packets for hosts other than the telephone host to those hosts and routing IP packets for the telephone host to the analog

and wherein said base station performs packet switching on incoming IP packets based on an IP destination address included in each said incoming IP packet;

and wherein said gateway unit switches incoming data packets onto the data network, translates incoming voice packets from IP packet format into analog voice representation and switches said analog voice representation onto a PSTN (50).

**Patentansprüche**

1. Lokales Funkringsystem, das aufweist:

ein Datennetzwerk (40, 95)/PSTN-Gateway-Einheit (30) bzw. Telefonnetz-Gateway-Einheit, zumindest eine Datenleitung, zumindest eine Fest- bzw. Basisstation (10), die entsprechend über die zumindest eine Datenleitung mit der Gateway-Einheit verbunden ist, eine Mehrzahl von Funkteilnehmereinheiten (60), die drahtlos mit der Basisstation kommunizieren, wobei jede Funkteilnehmereinheit zumindest eine Schnittstelle zu zumindest einem Server einschließlich eines Telefonhosts bzw. Telefonservers aufweist,

wobei das System **dadurch gekennzeichnet ist, daß** jede Teilnehmereinheit aufweist:

einen Analogwandler, der wirksam ist, um eingehende Information im IP-Paketformat in die analoge Sprachdarstellung zu übersetzen und diese analoge Sprachdarstellung dem Telefonserver zuzuführen, und um eine ankommende analoge Sprachinformation von dem Telefonserver zu empfangen, die ankommende analoge Sprachinformation in eine IP-Paket-formatierte Information zu übersetzen, und diese IP-Paket-formatierte Information der Basisstation zuzuführen, und einen Paketvermittler, der derart tätig ist, daß er die Paketvermittlung auf IP-Paketen, die von der Basisstation, die mit der Teilnehmereinheit verbunden ist, ankommen, durchführt, einschließlich des Leitens der IP-Pakete für Server außer dem Telefonserver zu diesen Servern und des Leitens der IP-Pakete für den Telefonserver zu dem analogen Wandler,

und wobei die Basisstation derart arbeitet, daß sie die Paketvermittlung auf ankommenden IP-Paketen basierend auf einer IP-Zieladresse, die in jedem der ankommenden IP-Datenpakete enthalten ist, durchführt, und wobei die Gateway-Einheit derart tätig ist, daß sie ankommende Datenpakete auf dem Datennetzwerk verteilt, daß sie ankommende Sprachpakete vom IP-Datenpaketformat in die analoge Sprachdarstellung übersetzt, und daß sie die analoge Sprachdarstellung auf ein PSTN (50) vermittelt.

2. System nach Anspruch 1, wobei jeder Server einen der folgenden Gruppen von Server- bzw. Hosttypen aufweist:

ein Telefon, ein Telefax, einen Computer, ein Datenmodem und ein Kabelmodem.

3. System nach Anspruch 1, wobei die zumindest eine Datenleitung Kabeldatenleitungen aufweist.

4. System nach Anspruch 1, wobei das Datennetzwerk das Internet (95) aufweist.

5. Lokales Ringfunkverfahren, das die Schritte aufweist:

Bereitstellen eines Datennetzwerkes (40, 95)/einer PSTN-Gateway-Einheit (30), zumindest einer Datenleitung, zumindest einer Basisstation (10), die mit der Gateway-Einheit über die zumindest eine Datenleitung verbunden ist, und einer Mehrzahl von Funkteilnehmereinheiten (60), die drahtlos mit der Basisstation kommunizieren, wobei jede Funkteilnehmereinheit zumindest eine Schnittstelle zu zumindest einem Server bzw. Host einschließlich eines Telefonservers beinhaltet,

wobei das Verfahren **gekennzeichnet ist durch** die Schritte:

Bereitstellen einer Teilnehmereinheit, die einen analogen Wandler aufweist, der derart betreibbar ist, daß er ankommende Information im IP-Datenpaketformat in die analoge Sprachdarstellung übersetzt, und die analoge Sprachdarstellung dem Telefonserver zuführt, und ankommende analoge Sprachinformation von dem Telefonserver empfängt, die ankommende analoge Sprachinformation in IP-Datenpaket-formatierte Information umwandelt, und die IP-Datenpaket-formatierte Information der Basisstation zuführt und
Durchführen der Datenpaketvermittlung auf IP-Datenpaketen, die von der Basisstation, die mit der Teilnehmereinheit verbunden ist, ankommen, einschließlich des Leitens der IP-Datenpakete für Hosts bzw. Server außer dem Telefonserver zu diesen Servern, und Leiten der IP-Datenpakete für den Telefonserver zu dem analogen Wandler,

und wobei die Basisstation die Datenpaketvermittlung auf ankommenden IP-Datenpaketen basierend auf einer IP-Zieladresse, die in jedem ankommenden IP-Datenpaket enthalten ist, durchführt,
und wobei die Gateway-Einheit ankommende Datenpakete auf dem Datennetzwerk verteilt, ankommende Sprachpakete vom IP-Datenpaketformat in die analoge Sprachdarstellung übersetzt und die analoge Sprachdarstellung auf ein PSTN (50) verteilt.

## Revendications

1. Système de boucle locale sans fil comprenant :

   une unité (30) formant passerelle entre un réseau de données (40 ; 95) et un réseau téléphonique commuté public (RTCP) ;
   au moins une ligne de données ;
   au moins une station de base (10) respectivement connectée à l'unité formant passerelle via ladite au moins une ligne de données ;
   une multiplicité d'unités d'abonnés sans fil (60) communiquant sans fil avec la station de base, chaque unité d'abonné sans fil comprenant au moins une interface avec au moins un hôte, notamment un hôte téléphonique, le système étant **caractérisé en ce que** chacune des unités d'abonnés comprend :

   un convertisseur analogique ayant pour fonction de traduire des informations entrantes selon un format de paquets IP en une représentation vocale analogique et de fournir ladite représentation vocale analogique à l'hôte téléphonique, et de recevoir des informations vocales analogiques entrantes de l'hôte téléphonique, de traduire lesdites informations vocales analogiques entrantes en des informations formatées sous forme de paquets IP et de fournir lesdites informations formatées sous forme de paquets IP à la station de base ; et
   un commutateur de paquets ayant pour fonction d'effectuer une commutation de paquets sur des paquets IP arrivant de la station de base connectée à l'unité d'abonné, comprenant l'acheminement de paquets IP pour des hôtes autres que l'hôte téléphonique vers ces hôtes, et l'acheminement de paquets IP pour l'hôte téléphonique vers le convertisseur analogique ;

   et dans lequel ladite station de base a pour fonction d'effectuer une commutation de paquets sur des paquets IP entrants sur la base d'une adresse de destination IP contenue dans chacun desdits paquets IP entrants ;
   et dans lequel ladite unité formant passerelle a pour fonction de commuter des paquets de données entrants sur le réseau de données, de traduire des paquets vocaux entrants d'un format de paquet IP en une représentation vocale analogique et de commuter ladite représentation vocale analogique sur un réseau RTCP (50).

2. Système selon la revendication 1, dans lequel chaque hôte comprend l'un du groupe suivant de types d'hôtes :

   un téléphone ;

un télécopieur ;
un ordinateur ;
un modem de données ; et
un modem câble.

3. Système selon la revendication 1, dans lequel ladite au moins une ligne de données comprend des lignes de données câblées.

4. Système selon la revendication 1, dans lequel le réseau de données comprend l'internet (95).

5. Procédé de boucle locale sans fil, comprenant les étapes consistant à :

utiliser une unité formant passerelle (30) entre un réseau de données (40 ; 95) et un réseau RTCP, au moins une ligne de données, au moins une station de base (10) respectivement connectée à l'unité formant passerelle via ladite au moins une ligne de données, et une multiplicité d'unités d'abonnés sans fil (60) communiquant sans fil avec la station de base, chaque unité d'abonné sans fil comprenant au moins une interface avec au moins un hôte comprenant un hôte téléphonique,
le procédé étant **caractérisé par** les étapes consistant à :

utiliser une unité d'abonné comprenant un convertisseur analogique ayant pour fonction de traduire des informations entrantes selon un format de paquet IP en une représentation vocale analogique et d'appliquer ladite représentation vocale analogique à l'hôte téléphonique, et de recevoir des informations vocales analogiques entrantes de l'hôte téléphonique, de traduire lesdites informations vocales analogiques entrantes en des informations formatées sous forme de paquets IP et de fournir lesdites informations formatées sous forme de paquets IP à la station de base ; et
effectuer une commutation de paquets sur des paquets IP arrivant de la station de base connectée à l'unité d'abonné, comprenant l'acheminement de paquets IP pour des hôtes autres que l'hôte téléphonique vers ces hôtes et l'acheminement de paquets IP pour l'hôte téléphonique vers le convertisseur analogique ;

et dans lequel ladite station de base effectue une commutation de paquets sur des paquets IP entrants sur la base d'une adresse de destination IP contenue dans chacun desdits paquets IP entrants ;
et dans lequel ladite unité formant passerelle commute des paquets de données entrants sur le réseau de données, traduit des paquets vocaux entrants d'un format de paquet IP en une représentation vocale analogique et commute ladite représentation vocale analogique sur un réseau RTCP (50).

MANAGEMENT

DATA NETWORK

LAN

POTS

...packet switched
air protocol

ROUTER
20

GATE
KEEPER

AIU

GATEWAY

BSU

EPU

EPU

EPU

EPU

EPU

EPU

60

70

80

40

10

30

50

PSTN

TELEWORKING

FIG. 1

EP 1 138 137 B1

# FIG. 2

EP 1 138 137 B1

# FIG. 3

6 AIUs CELL

12 AIUs CELL

# FIG. 4

60° SECTOR

IP OVER ETHERNET
(10 BASE T)

AIU1

....packet switched protocol
towards the end user

# FIG. 5

ROUTER

NETWORK

10BASE T

90

20

UP TOAIU16s

10BASE T

10BASE T OR
100BASE T

90

# FIG. 6

95

IP NETWORK

ROUTER

90

20

GATE
KEEPER

100

100BASE T

50

PSTN

GATEWAY

30

EP 1 138 137 B1

# FIG. 7

PACKET SWITCHED
AIR PROTOCOL

AIU

IDA    120

LAN

10BASE T

IP OVER ETHEMET
(10BASE T)

23° SECTOR

110

A/B LINES

# FIG. 8

AIU
(outdoor)

130

INTEGRATED
IDA

1 ETHERNET
+
2 POTS LINES

ETHERNET (10BASE T)

EPU

29

FIG. 9

# FIG. 10

DATA SOURCE — 1120

1110 — BROUTER

1010 — QOS SERVER

1030 — PROTOCOL DETECTOR

1020 — CONNECTION LAYER

1040 — UDP ANALYZER

1060 — TCP ANALYZER

1050 — ICMP ANALYZER

1080 — QOS POLICY

1070 — TTL STAMP MANAGER

UTILIZATION MONITORING UNIT

1085

1100 — ACCESS

1090 — CLASS QUEUING

# FIG. 11

MEASURE CURRENT, INSTANTANEOUS
END-TO-END LATENCY — 1360

COMPUTE WHEN THE PACKETS WILL BE NEEDED IN ORDER
TO MEET LATENCY BOUNDS AND RATE GUARANTEE — 1370

SPECIFY HOW MUCH DATA TO "ORDER" BY
SETTING THE TCP WINDOW SIZE — 1380

PLACE THE "ORDER" SUCH THAT THE DATA WILL ARRIVE
JUST WHEN THE OTHER SESSION SIDE EXPECTS IT — 1390

SENDER 1150 RECEIVER

DATA 20000−21000

1140

1130

1170 ACK 20000
WIN 2000

QOS SERVER

ACK 21000
WIN 8000 1160

DATA 21000−22000

1180

FIG. 12

1190 ACK 20000
WIN 2000

DATA 22000−23000

1200

FIG. 13A
WITHOUT QOS−S

SENDER RECEIVER

DATA #1 1210.1

DATA #2

1210.2

1140

1130

DATA #3
DATA #4
DATA #5

DATA #6
DATA #7

1210.7

BURSTY TRAFFIC FLOW

FIG. 13B
WITH QOS−S

SENDER RECEIVER

DATA #1

220.1

DATA #2

220.2

1140

DATA #3

1130

DATA #4

DATA #5

DATA #6

DATA #7

1220.7

SMOOTH TRAFFIC FLOW

33

FIG. 14

QOS POLICY SERVER — 1080

CONNECTION CONTROL — 230

BANDWIDTH CONTROL — 1240

ACCESS CONTROL — 1250

SWITCHOVER — 1260

VIRTUAL NETWORKS — 1270

SPOOFING — 1280

TOPOLOGY FORCING — 1290

BANDWIDTH SHAPER — 1300

PRIORITIZATION — 1310

RELATIVE BANDWIDTH POLICY — 1320

ABSOLUTE BANDWIDTH POLICY — 1330

SECURITY — 1340

DIFFERENTIAL ACCESS — 1350

## FIG. 15A

Network — Drop

## FIG. 15B

Network — Recolor

## FIG. 15C

Network — Drop / Recolor

## FIG. 15D

Multimedia

Network

Mission-Critical

Per Application CAR

EP 1 138 137 B1